# EUROPÄISCHE PATENTSCHRIFT

(11) **EP 2 637 535 B1**
(45) Veröffentlichungstag und Bekanntmachung des Hinweises auf die Patenterteilung: **21.01.2015**
(21) Anmeldenummer: 11776448.0
(22) Anmeldetag: 31.10.2011
(51) Int. Cl.: A47J 31/52

(54) **HEISSGETRÄNKEZUBEREITUNGSVORRICHTUNG MIT DATENÜBERTRAGUNGSEINRICHTUNG**
HOT-BEVERAGE PREPARATION APPARATUS HAVING A DATA TRANSMISSION DEVICE
DISPOSITIF DE PRÉPARATION DE BOISSONS CHAUDES COMPORTANT UN ÉQUIPEMENT DE TRANSMISSION DE DONNÉES

(30) Priorität: 12.11.2010 DE 102010043856
(43) Veröffentlichungstag der Anmeldung: 18.09.2013
(73) Patentinhaber: BSH Bosch und Siemens Hausgeräte GmbH, 81739 München (DE)
(72) Erfinder: DABURGER, Josef, 83313 Siegsdorf-Hammer (DE); SCHULZE, Michael, 81925 München (DE)
(86) Internationale Anmeldenummer: PCT/EP2011/069130
(87) Internationale Veröffentlichungsnummer: WO 2012/062616

(56) Entgegenhaltungen:
- EP-B1- 1 302 138
- WO-A1-2008/001403
- WO-A2-2010/009975

## Beschreibung

Die Erfindung betrifft eine Heißgetränkezubereitungsvorrichtung, insbesondere eine Kapselmaschine, mit einem Schallemissionen und/oder Vibrationen und/oder elektromagnetische Emissionen erzeugenden Aktuator, der in einem Normalbetriebsmodus zur Heißgetränkezubereitung betreibbar ist, wobei die Heißgetränkezubereitungsvorrichtung zur Übertragung von Daten zu einem Empfangsgerät ausgebildet ist.

Aus der EP 1 302 138 B1 ist eine Kaffee-Brühvorrichtung zur Heißgetränkezubereitung bekannt. Die Kaffee-Brühvorrichtung gemäß der EP 1 302 138 B1 weist eine Schnittstelle mit elektrischen Kontakten auf. Die Schnittstelle ist zur Aufnahme eines mobilen Speichermoduls ausgebildet, in das Daten über den Zustand der Kaffee-Brühvorrichtung bzw. Kaffeemaschine eingelesen werden können. Durch Einsetzen des Speichermoduls in eine Docking-Station eines Personal Computers können die Daten aus dem Speichermodul ausgelesen werden. Derartige, elektrische Kontakte aufweisende Schnittstellen können jedoch durch Verschmutzungen funktionsunfähig werden oder durch unsachgemäße mechanische Belastungen beim Einsetzen des Speichermoduls derart Schaden nehmen, dass das Speichermodul nicht mehr eingesetzt werden kann und somit die Schnittstelle funktionsunfähig ist.

Die WO 2008 001403 A1 betrifft ein Verfahren zur Erfassung einer Körnermenge in einem Behälter eines sich drehenden Mahlelements sowie einer Mahlvorrichtung zur Durchführung dieses Verfahrens.

Die WO 2010 009975 A2 betrifft einen Behälter mit einem Hohlraum zur Aufnahme einer ausschenkbaren Substanz und eine Vorrichtung zum messen einer oder mehrerer charakteristischer Daten der Substanz und für eine drahtlose Übertragung der Daten aus dem Hohlraum heraus.

Es ist daher Aufgabe der Erfindung, eine zuverlässigere Datenübertragung zu ermöglichen.

Diese Aufgabe wird bei einer Heißgetränkezubereitungsvorrichtung der eingangs genannten Art durch eine Vorrichtung mit den Merkmalen von Anspruch 1 gelöst, wobei der Aktuator mindestens in einem Schallemissionen und/oder Vibrationen und/oder elektromagnetische Emissionen erzeugenden Datenübertragungsmodus zur Übertragung von Daten zu einem Empfangsgerät betreibbar ist. Die Erfindung wendet sich also davon ab, eine separate Schnittstelle in Form eines hierzu ausgebildeten Bauteils mit elektrischen Kontakten für einen Datenaustausch vorzusehen. Somit ist eine Verschmutzung oder Beschädigung von elektrischen Kontakten der Schnittstelle ausgeschlossen. Sie verfolgt vielmehr das Prinzip, die Datenübertragung kontaktlos über eine freie Luftstrecke zu ermöglichen und sieht hierzu eine Datenübertragung mittels Emissionen vor, die von einem vorhandenen Aktuator erzeugt werden. Somit wird auf überraschend einfache Weise eine z. B. kabel- und berührungslose Übertragung von Daten zu einem Empfangsgerät ermöglicht, ohne dass zusätzliche Bauteile hierfür notwendig sind. Denn es wird hierzu ein ohnehin vorhandener Aktuator, erfindungsgemäß aber in zweifacher Funktion verwendet, nämlich in seiner herkömmlichen Funktion und in seiner zusätzlichen Funktion als Emittent von Schall, Vibrationen oder elektromagnetischen Emissionen, d. h. elektromagnetischen Wellen oder elektrischen oder magnetischen Feldern oder dergleichen. Diese Funktionenkorribination reduziert den Fertigungsaufwand und erhöht die Funktionssicherheit. Die emittierten Informationen können aufgrund des erfindungsgemäßen Übertragungswegs nach Empfang entschlüsselt werden, um die gesendeten Informationen zu verwenden. Somit wird eine ungewollte Nutzung der übertragenen Daten verhindert.

Der Aktuator kann erfindungsgemäß in dem Normalbetriebsmodus und in dem Datenübertragungsmodus betrieben werden. Der Datenübertragungsmodus kann sich vom Normalbetriebsmodus dadurch unterscheiden, dass der Aktuator mit unterschiedlichen Ansteuersignalen betrieben wird, die sich zum Beispiel hinsichtlich der Frequenz oder des Zündwinkels unterscheiden, wenn eine Phasenanschnittsteuerung verwendet wird. Es ist aber auch möglich, den Aktuator sowohl im Normal- als auch im Datenübertragungsmodus mit gleichen Ansteuersignalen zu betreiben, d. h. den Aktuator auf gleiche Art und Weise zu betreiben. Es ist möglich, den Aktuator zugleich im Normalbetriebsmodus und im Datenübertragungsmodus zu betreiben, d. h. eine Datenübertragung erfolgt in diesem Fall während der Getränkezubereitung. Ferner kann vorgesehen sein, dass zwischen einem Betrieb im Normalbetriebsmodus und im Datenübertragungsmodus eine Pause vorgesehen ist, innerhalb der der Aktuator weder im Normalbetriebsmodus noch im Datenübertragungsmodus betrieben wird, also stillsteht. Dabei kann die Zeitdauer der Pause derart bemessen sein, dass sie zumindest größer ist als die Zeitdauer, während der der Aktuator bei Betrieb im Normalbetriebsmodus oder im Datenübertragungsmodus stillsteht. Als Signalform können Schallemissionen im hörbaren oder auch im nicht-hörbaren Bereich, wie zum Beispiel Ultraschall Verwendung finden, wobei die Verwendung von Ultraschall die Geräuschbelastung reduziert. Alternativ können auch mechanische Vibrationen, so genannter Körper- und/oder Luftschall, oder auch elektromagnetische Emissionen, zum Beispiel in Form von elektromagnetischen Wellen, Verwendung finden, die bei Betrieb des Aktuators erzeugt werden.

In einer Weiterbildung ist vorgesehen, dass die Daten Messwerte von Sensoren der Helßgetränkezubereitungsvorrichtung und/oder ihre Fehlfunktionen kennzeichnende Fehlercodes, und/oder Betriebsparameter der Heißgerätezubereitungsvorrichtung und/oder Informationen über ein Heißgetränk sind. Dies erlaubt es, die Funktion von Sensoren auf einfache Weise, d. h. ohne Demontage der Heißgetränkezubereitungsvorrichtung, zu überprüfen. Bei den Sensoren kann es sich bspw. um Sensoren zu Erfassung der Durchflussmenge, der Temperatur, der elektrischen Spannung oder Stromes oder zur Erfassung von Füllständen mit Betriebsmittel, wie zum Beispiel von Wasser, handeln. Somit ist eine einfache Überprüfung der Funktionsfähigkeit der Sensoren gegeben. Durch die Übertragung von Fehlercodes, die bestimmte Fehlfunktionen der Heißgetränkezubereitungsvorrichtung bezeichnen, wird die Diagnose im Fehlerfall weiter vereinfacht. Hierzu wird die Selbstdiägnosefähigkeit der Heißgetränkezubereitungsvorrichtung verwendet, die es erlaubt, Fehlfunktionen, zum Beispiel aufgrund eines Ausfalls eines Bauteils, mittels einer Steuerung der Heißgetränkezubereitungsvorrichtung zu erfassen und einen entsprechenden Fehlercode zuzuordnen. Mit der Übertragung von Betriebsparametern, wie zum Beispiel der Anzahl von Brühzyklen, der Durchflussmenge, der Anzahl der Entkalkungen, von ausgelesenen Barcodes von Getränkezubereitungskapseln und/oder der zubereiteten Heißgetränken, können Informationen darüber übermittelt werden, wie lange die letzte Wartung zurückliegt bzw. welchen Belastungen die Heißgetränkezubereitungsvorrichtung ausgesetzt war. Somit können bei Bedarf eine Vielzahl von Informationen zur Verfügung gestellt werden, die eine genaue Diagnose von Fehlerursachen erlauben. Schließlich erlauben die Informationen über ein Heißgetränk darüber zu informieren, welches Getränk bzw. welche Getränkeart zubereitet wurde oder gerade zubereitet wird.

In einer vorteilhaften Weiterbildung können die Daten wenigstens ein den Beginn der Übertragung der Daten kennzeichnendes Startsignal und ein die Datenbestandteile trennendes Trennsignal aufweisen. Somit wird auf einfache Weise eine Datenübertragung zu einem Empfangsgerät möglich, wobei durch das Start- und das Trennsignal eine besonders sichere Datenübertragung ohne Fehler gewährleistet wird. Außerdem kann auf das Startsignal eine Übertragung der Anzahl der zu übertragenden Zeichen erfolgen. In diesem Fall ist die Übertragung eines Endsignals nicht erforderlich. Alternativ kann ein zusätzliches Endsignal übertragen werden. Das Trennsignal kann eine Dauer von 20 ms und das Endsignal eine Dauer von 30 ms aufweisen. Es sind aber, soweit die mechanische Trägheit dies erlaubt, auch kürzere Trenn- bzw. Endsignale möglich. Ferner können auch andere Spannungsformen, wie z.B. Rechteckspannungen oder gepulste Gleichspannungen zur Erzeugung der Trenn- und/oder Endsignale verwendet werden.

In einer Weiterbildung der Erfindung kann der Aktuator zuerst in wenigstens einem Datenübertragungsmodus und nachfolgend in dem Normalbetriebsmodus betreibbar sein, insbesondere im Fall einer Fehlererfassung durch die Heißgetränkezubereitungsvorrichtung. Dies erlaubt es, Fehlerursachen, wie zum Beispiel defekte Sensoren, die zum Beispiel einen Abbruch einer programmgemäßen Heißgetränkezubereitung zur Folge haben, vor dem Programmabbruch zu übertragen. Daneben ist es aber auch möglich, durch einen Betrieb in dem Datenübertragungsmodus nach dem Normalbetriebsmodus zum Beispiel den erfolgreichen Abschluss einer Heißgetränkezubereitung zu signalisieren oder auch gegebenenfalls einen erst während der Heißgetränkezubereitung aufgetretenen Fehlerfall mitzuteilen.

In einer weiteren Weiterbildung der Erfindung ist vorgesehen, dass während des Normalbetriebsmodus der Aktuator für eine vorbestimme erste Mindestzeitdauer und während des Datenübertragungsmodus für eine vorbestimmte zweite Mindestzeitdauer betreibar ist, wobei die erste Mindestzeitdauer länger als die zweite Mindestzeitdauer ist. Dabei kann die erste Mindestbetriebsdauer zum Beispiel 100 bis 1000 mal so lang sein wie die zweite Mindestbetriebsdauer. Somit wird die Gesamtbetriebsdauer des Aktuators durch den zusätzlichen Betrieb im Datenübertragungsmodus nur geringfügig erhöht, sodass keine Auslegung des Aktuators auf eine deutlich erhöhte Gesamtbetriebsdauer erforderlich ist.

Als Aktuator eignet sich jede Komponente einer Heißgetränkezubereitungsvorrichtung, sofern sie bei Betrieb akustische Emissionen und/oder Vibrationen und/oder elektromagnetische Emissionen erzeugt, zum Beispiel das Mahlwerk oder die Pumpe, eines Kaffeevollautomaten bzw. die Pumpe einer Kapselmaschine. Erfindungsgemäß ist vorgesehen, dass die Pumpe zum Fördern von Flüssigkeit, insbesondere von Wasser, als Aktuator ausgebildet ist, mit der auf besonders einfache Art und Weise durch gezielte Inbetriebnahme der Pumpe während des Datenübertragungsmodus akustische Emissionen und/oder Vibrationen und/oder elektromagnetische Emissionen erzeugt werden können.

In einer bevorzugten Weiterbildung kann die Pumpe im Normalbetriebsmodus eine größere Flüssigkeitsmenge fördern als im Datenübertragungsmodus. Hierzu kann zum Beispiel die Pumpe im Datenübertragungsmodus in einem anderen Arbeitspunkt mit geringerer Förderleistung als im Normalbetriebsmodus betrieben werden, zum Beispiel durch eine entsprechende Ansteuerung. Ferner wirkt sich die Betriebsdauer im Normal- und Datenübertragungsmodus auf die geförderte Flüssigkeitsmenge aus, insbesondere wenn die Pumpe eine Anlaufphase aufweist, die erst durchlaufen werden muss, bevor sich ein stabiler Betriebszustand der Pumpe mit im Wesentlicher konstanter Förderrate einstellt. So wird die Pumpe im Datenübertragungsmodus geringer pro Zeiteinheit belastet als im Normalbetriebsmodus, wodurch der zusätzliche Energiebedarf durch den Betrieb im Datenübertragungsmodus reduziert werden kann. Zugleich wird die mechanische Belastung der Pumpe im Datenübertragungsmodus gering gehalten und ihre Lebensdauer nicht wesentlich verkürzt.

Als Pumpe können zum Beispiel Kreiselpumpen oder auch Kolbenpumpen Verwendung finden. Vorzugsweise ist aber vorgesehen, dass die Pumpe eine Feder und einen zwischen zwei Endlagen beweglich gelagerten Kolben aufweist, wobei in einer der Endlagen die Feder gespannt ist. Somit weist die Pumpe einen besonders einfachen, aber robusten Aufbau auf, wobei durch eine erste Bewegung des Kolbens von der ersten zur zweiten Endlage eine Pumpkammer, in der der Kolben angeordnet ist, mit Flüssigkeit, wie zum Beispiel Wasser, gefüllt wird. Zugleich wird zum Beispiel dabei die Feder gespannt. Durch eine weitere, entgegensetzten Bewegung des Kolbens von der zweiten in die erste Endlage wird die Flüssigkeit aus der Pumpkammer gedrängt. Vorzugsweise ist der Pumpe ein Elektromagnet zugeordnet, mittels dem bei Bestromung des Elektromagneten der Kolben in eine der beiden Endlage bringbar ist.

In einer weiteren Weiterbildung der Erfindung ist vorgesehen, dass die Heißgetränkezubereitungsvorrichtung einen ersten Flüssigkeitsführungsweg aufweist, entlang dem Flüssigkeit während des Normalbetriebsmodus leitbar ist, und einen zweiten Flüssigkeitsführungsweg, entlang dem Flüssigkeit während des Datenübertragungsmodus leitbar ist. Dies erlaubt es, auch im Datenübertragungsmodus den zum Beispiel als Pumpe ausgebildeten Aktuator so anzusteuern, dass sich zum Beispiel eine Förderrate vergleichbar dem Normalbetriebsmodus einstellt, ohne das es zu einer ungewünschten Zuführung von Flüssigkeit in zur Heißgetränkezubereitung vorgesehenen Komponenten der Heißgetränkezubereitungsvorrichtung, wie zum Beispiel einer Brühkammer kommt. Somit sind zwei Flüssigkeitsführungswege vorgesehen, von denen der erste dem Normalbetriebsmodus und der zweite dem Datenübertragungsmodus zugeordnet ist. So wird insbesondere sichergestellt, dass die Qualität des Heißgetränks nicht durch vorzeitige und/oder unkontrollierte Zufuhr von Flüssigkeit, wie zum Beispiel nicht ausreichend aufgeheiztem Wasser, beeinträchtigt wird.

Dabei ist vorzugsweise vorgesehen, dass der erste Flüssigkeitsführungsweg zu einem Heißgetränkbehälter für das zu erzeugende Heißgetränk führt, und der zweite Flüssigkeitsführungsweg zu einem Sammelbehälter für nicht verwendete Flüssigkeit. Es kann sich bei dem Sammelbehälter im Fall einer Kapselmaschine um eine Tropfschale unter einer Aufstellfläche für Getränkebehälter handeln. Alternativ kann der zweite Flüssigkeitsführungsweg eine flüssigkeitsführende Verbindung zu einem Vorratstank der Heißgetränkezubereitungsvorrichtung zur Bevorratung von Flüssigkeit zur Heißgetränkezubereitung herstellen, so dass die während des Datenübertragungsmodus geförderte Flüssigkeit wieder verwendet werden kann. Dadurch lässt sich der Wasserverbrauch reduzieren.

Ferner gehört zur Erfindung die Verwendung einer Heißgetränkezubereitungsvorrichtung wie in Anspruch 9 definiert, insbesondere einer Kapselmaschine zur Übertragung von Daten zu einem Empfangsgerät, das zum Empfang von Daten ausgebildet ist, die von einer erfindungsgemäßen Heißgetränkezubereitungsvorrichtung gesendet werden. Es kann die vom Aktuator ausgesandten Emissionen empfangen und weist hierzu entsprechende Empfangsmittel auf, wie zum Beispiel Mikrofone oder Schwingungssensoren oder Antennen. Ferner weist das Empfangsmittel Datenverarbeitungsmittel auf, um die empfangenen Daten zu entschlüsseln bzw. zu übersetzen, so dass ein Bediener die übertragenen Informationen erfassen kann. Es kann auch vorgesehen sein, die Fehlercodes über eine Internetverbindung weiterzuleiten, um eine Ferndiagnose zu ermöglichen.

Im Folgenden wird das Prinzip der Erfindung anhand einer Zeichnung beispielhaft noch näher erläutert. In der Zeichnung zeigen:
- Fig. 1: eine schematische Darstellung eines ersten Ausführungsbeispiels einer erfindungsgemäßen Heißgetränkezubereitungsvorrichtung in Verbindung mit einem Empfangsgerät,
- Fig. 2: eine schematische Darstellung eines Antriebs der erfindungsgemäßen Heißgetränkezubereitungsvorrichtung, und
- Fig. 3: ein Ablaufdiagramm einer Datenübertragung.

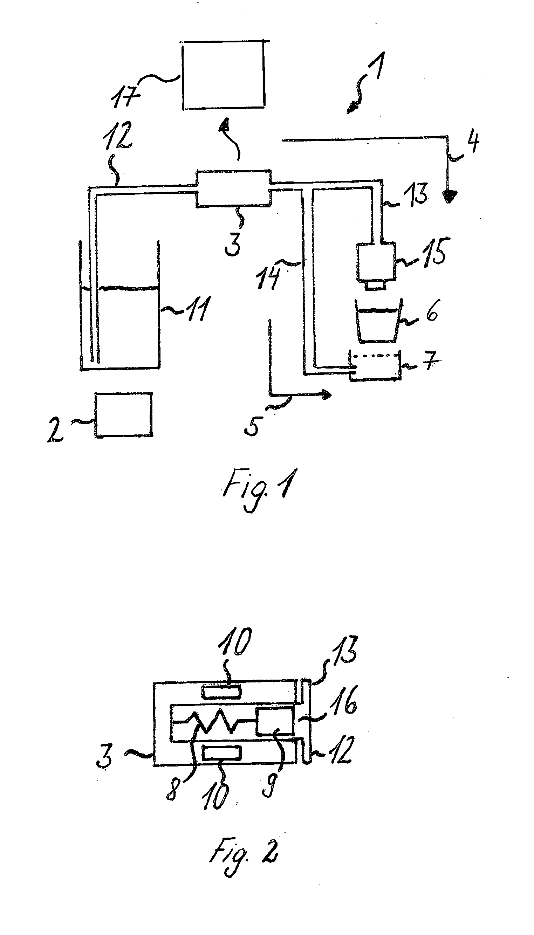

Es wird zunächst auf die Fig. 1 und 2 Bezug genommen. Dargestellt als ein Ausführungsbeispiel für eine Heißgetränkezubereitungsvorrichtung ist eine Kapselmaschine 1. Die Kapselmaschine 1 weist einen Wassertank 11 auf, der über einen ersten Leitungsabschnitt 12 mit dem als Pumpe 3 ausgebildeten Aktuator flüssigkeitsleitend verbunden ist. Ein zweiter Leitungsabschnitt 13 stellt eine flüssigkeitsleitende Verbindung zu einer Brühkammer 15 zum Aufheizen des Wassers her, an der zum Beispiel ein Filtersieb (nicht dargestellt) für Kaffee angefügt sein kann.

Von dem zweiten Leitungsabschnitt 13 zweigt ein dritter, als Bypass ausgebildeter Leitungsabschnitt 14 ab, der in einem als Tropfschale ausgebildeten Sammelbehälter 7 endet. Somit weist die Kapselmaschine 1 einen ersten Flüssigkeitsführungsweg 4 auf, der sich vom Wassertank 11 über den ersten Leitungsabschnitt 12, die Brühkammer 15 und den zweiten Leitungsabschnitt 13 zu einem Heißgetränkebehälter 6 für das zu erzeugende Heißgetränk führt, sowie einen zweiten Flüssigkeitsführungsweg 5 auf, entlang dem Wasser an der Brühkammer 15 vorbei direkt in den Sammelbehälter 7 geleitet werden kann. Zur wahlweisen Lenkung des Wassers entlang des ersten Flüssigkeitsführungswegs 4 oder zweiten Flüssigkeitsführungswegs 5 kann ist ein entsprechendes Ventil (nicht dargestellt) vorgesehen sein.

Zur Bedienung der Kapselmaschine 1 durch eine Bedienperson sind Bedienmittel 2 zum Ein- und Ausschalten der Kapselmaschine 1 sowie zur Betriebsprogrammauswahl eines Betriebsprogramms zur Zubereitung eines bestimmten Heißgetränks, wie zum Beispiel Espresso, aus einer Mehrzahl von Betriebsprogrammen zur Zubereitung verschiedener Heißgetränke vorgesehen. Über Leitungen (nicht dargestellt) sind die Bedienmittel 2 mit einer Steuerung (nicht dargestellt) des Kaffeeautomaten 1 verbunden, die durch gezielte Ansteuerung verschiedener Aggregate bzw. Aktuatoren der Kapselmaschine 1 die Zubereitung eines gewünschten Heißgetränks bewirken. Einer dieser Aktuatoren, der durch Leitungen (nicht dargestellt) mit der Steuerung zur Ansteuerung verbunden ist, ist die Pumpe 3.

Die Pumpe 3 weist eine Pumpkammer 16 auf, in der ein Kolben 9 zwischen zwei Endlagen beweglich gelagert ist. Dabei ist eine Feder 8 so angeordnet, dass die Feder 8 in einer der Endlagen gespannt ist und so den Kolben 9 in die andere Endlage drängt. Um den Kolben entgegen der Federrichtung verlagern zu können, ist ein Elektromagnet 10 vorgesehen, der bei Bestromung, zum Beispiel durch die Steuerung, den Kolben 9 in Richtung dieser Endlage bewegt. Es wird im bestromten Zustand der Kolben 9 entgegen der Federkraft der Feder 8 bewegt, so dass sich die Pumpkammer 16 mit Flüssigkeit füllt. Wenn keine Bestromung erfolgt entspannt sich die Feder 8 und drängt den Kolben 9 in Richtung der anderen Endlage und fördert damit die Flüssigkeit aus der Pumpkammer 16. Dabei verhindert ein Rückschlagventil (nicht dargestellt) eine ungewünschte Rückströmung.

Ferner ist ein Empfangsgerät 17 vorgesehen, das ausgebildet ist, von Kapselmaschinen 1 während eines Datenübertragungsmodus II erzeugte Daten in Form von Schallwellen bzw. -emissionen zu empfangen. Hierzu weist das Empfangsgerät 17 entsprechende Empfangsmittel, wie zum Beispiel Mikrofone oder Schwingungssensoren oder Antennen auf. Ferner weist das Empfangsgerät 17 Datenverarbeitungsmittel auf, um die empfangenen Daten zu entschlüsseln.

Diese Daten werden im Empfangsgerät 17 ausgewertet und mit abgespeicherten Fehlercodes verglichen. Diese Fehlercodes selbst oder entsprechenden Angaben können mit Anzeigemitteln, wie zum Beispiel einer Textanzeige oder einem Bildschirm zur Anzeige gebracht werden.

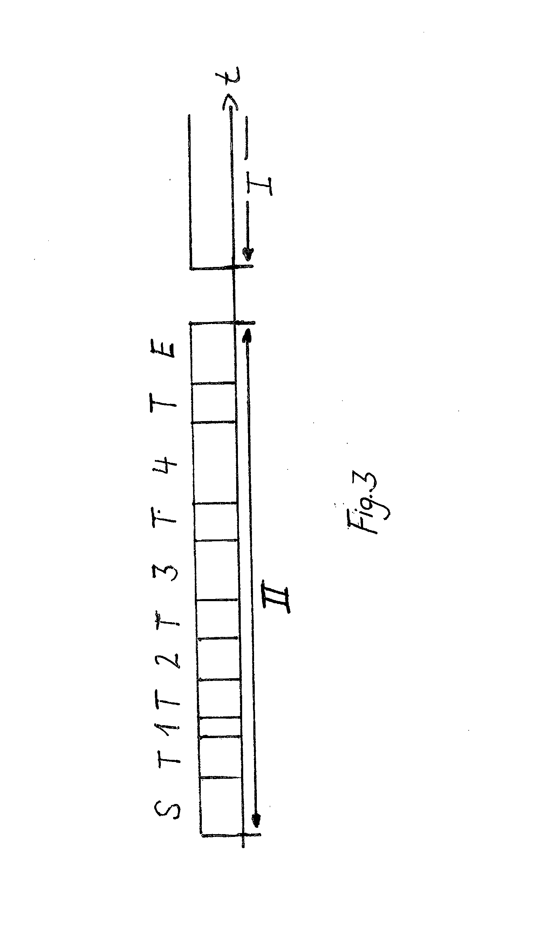

Es wird nun zusätzlich auf die Fig. 3 Bezug genommen. Dargestellt ist ein Ablaufdiagramm eines typischen Bedienvorgangs der Kapselmaschine 1. Eine Bedienperson schaltet die Kapselmaschine 1 durch Betätigen der als Touchdisplay ausgebildeten Bedienmittel 2 ein.

Im Anschluss daran führt die Steuerung eine Selbstdiagnose durch und erfasst, dass ein Temperatursensor (nicht dargestellt) zum Beispiel zur Erfassung der Temperatur der Flüssigkeit, defekt ist. Darauf hin steuert die Steuerung die Pumpe 3 derart an, dass diese im Datenübertragungsmodus II zuerst ein Startsignal S erzeugt. Dabei wird die Pumpe 3 mit einer Wechselspannung von 50 Hz betrieben, sodass während jeder Halbwelle ein Kolbenhub erfolgt, also alle 10 ms. Das Startsignal S ist als drei Kolbenhübe mit einer Dauer von 30ms definiert. Es folgt dass Trennsignal T, dass eine Dauer von 20 ms aufweist, wobei während dieser Zeitdauer kein Kolbenhub erfolgt und folglich auch kein Pumpenstrom fließt. Daran schließt sich die Übermittelung des Fehlercodes für den defekten Temperatursensor an, wofür die Ziffernfolge "1234" festgelegt wurde. Dabei wurde festgelegt, dass für die Ziffer "1" ein Kolbenhub (Dauer 10ms), für die Ziffer "2" zwei Kolbenhübe (Dauer 20 ms), für die Ziffer "3" drei Kolbenhübe (Dauer 30 ms) und für die Ziffer "4" vier Kolbenhübe (Dauer 40 ms) vorgesehen sind, wobei zwischen der Übertragung der einzelnen Ziffer 1, 2, 3, 4 jeweils das Trennsignal T vorgesehen ist. Die Übertragung wird durch das Endsignal E beendet, für das drei Kolbenhübe (Dauer 30 ms) festgelegt wurden. Diese akustischen Signale werden von dem Empfangsgerät 17 empfangen, ausgewertet und zum Beispiel zur Anzeige gebracht oder der empfangene Fehlercode wird über eine Internetverbindung zur Weiterverarbeitung an eine entsprechende Auswertungssoftware weitergeleitet. Es folgt, sofern der erfasste Fehler es erlaubt, ein Betrieb im Normalbetriebsmodus I zur Herstellung des Heißgetränks.

Nach dem Weiterleiten der empfangenen Daten, z. B. mittels einer Internetverbindung oder anderer drahtgebundener oder drahtloser Datenübertragungseinrichtungen können diese Daten auf verschiedene Art und Weise ausgewertet und nutzbar gemacht werden. So können sie z. B. mittels einer Auswertesoftware hinsichtlich des Nutzerverhaltens ausgewertet werden, d. h. z. B. bezüglich der Häufigkeit der Auswahl bestimmter Betriebsprogramme und/oder ausgewählter Getränke. So lässt sich das Nutzerverhalten unter Verwendung der Kapselmaschine als Datenlieferant detailliert und automatisch erfassen und auswerten. Dies erlaubt es in einem nächsten Schritt, an das Empfangsgerät eines Nutzers personalisierte oder gerätebezogene Nachrichten zu senden. Inhalt dieser Nachrichten können z. B. Empfehlungen bzw. Hinweise zum Erwerb von bestimmten Entkalkungsmitteln, Kaffeebohnen und/oder, Kapseln, oder Informationen über neue Gerätevarianten und/oder Stammkundenprogramme sein. So können zielgerichtet. Werbebotschaften an einen Nutzer gesendet werden. Zusätzlich ist es möglich, Nachrichten an einen Nutzer zu schicken, die als gerätebezogene Informationen z. B. Hinweise auf einen sich in Kürze erschöpfenden Betriebsmittelvorrat, wie z. B. einen Kaffee- oder Kapselvorrat, enthalten. Es können auch Informationen übermittelt werden, die z. B. eine in Kürze bevorstehende Wartungsroutine des Geräts ankündigen, wie z. B. ein Programm zur Entkalkung, sodass ein Nutzer in die Lage versetzt wird, bei Bedarf eine derartige Wartungsroutine durch manuelles Auslösen zeitlich vorzuziehen, um eine wartungsbedingte Nichtbetriebsbereitschaft zu einem bestimmten Zeitpunkt auszuschließen.

## Patentansprüche

1. Heißgetränkezubereitungsvorrichtung, insbesondere Kapselmaschine (1), mit einer Steuerung, mit einem Schallemissionen und/oder Vibrationen und/oder elektromagnetische Emissionen erzeugenden Aktuator, der in einem Normalbetriebsmodus (I) zur Heißgetränkezubereitung betreibbar ist und mit einem Empfangsgerät, wobei die Heißgetränkezubereitungsvorrichtung zur Übertragung von Daten zu dem Empfangsgerät (17) ausgebildet ist, **dadurch gekennzeichnet, dass** der Aktuator als Pumpe (3) zum Fördern von Flüssigkeit, insbesondere Wasser, ausgebildet ist und durch die Steuerung in mindestens einem Datenübertragungsmodus (II) so betrieben wird, dass Schallemissionen und/oder Vibrationen und/oder elektromagnetische Emissionen zur Übertragung von Daten zu einem Empfangsgerät (17) erzeugt werden.

2. Heißgetränkezubereitungsvorrichtung nach Anspruch 1, **dadurch gekennzeichnet, dass** die Daten Messwerte von Sensoren der Heißgetränkezubereitungsvorrichtung und/oder Fehlfunktionen des Heißgetränkezubereitungsvorrichtung kennzeichnete Fehlercodes und/oder Betriebsparameter der Heißgerätezubereitungsvorrichtung und/oder Informationen über ein Heißgetränk sind.

3. Heißgetränkezubereitungsvorrichtung nach Anspruch 1 oder 2, **dadurch gekennzeichnet, dass** die Daten wenigstens ein den Beginn der Übertragung der Daten kennzeichnendes Startsignal (S) und ein Datenbestandteile der Daten trennendes Trennsignal (T) aufweisen.

4. Heißgetränkezubereitungsvorrichtung nach einem der Ansprüche 1 bis 3, **dadurch gekennzeichnet, dass** der Aktuator zuerst in wenigstens einem Datenübertragungsmodus (II) und dann nachfolgend in dem Normalbetriebsmodus (I) betreibbar ist, insbesondere im Fall einer Fehlererfassung durch die Heißgetränkezubereitungsvorrichtung.

5. Heißgetränkezubereitungsvorrichtung nach einem der Ansprüche 1 bis 4, **dadurch gekennzeichnet, dass** während des Normalbetriebsmodus (I) der Aktuator für eine vorbestimme erste Mindestzeitdauer und während des wenigstens einem Datenübertragungsmodus (II) für eine vorbestimmte zweite Mindestzeitdauer betreibbar ist, wobei die erste Mindestzeitdauer länger als die zweite Mindestzeitdauer ist.

6. Heißgetränkezubereitungsvorrichtung nach einem der Ansprüche 1 bis 5, **dadurch gekennzeichnet, dass** die Pumpe (3) im Normalbetriebsmodus (I) eine größere Flüssigkeitsmenge fördert als im Datenübertragungsmodus (II).

7. Heißgetränkezubereitungsvorrichtung nach einem der Ansprüche 1 bis 6, **dadurch gekennzeichnet, dass** die Pumpe (3) eine Feder (8) und einen zwischen zwei Endlagen beweglich gelagerten Kolben (9) aufweist, wobei in einer der Endlagen die Feder (8) gespannt ist.

8. Heißgetränkezubereitungsvorrichtung nach einem der Ansprüche 1 bis 7, **dadurch gekennzeichnet, dass** die Heißgetränkezubereitungsvorrichtung einen ersten Flüssigkeitsführungsweg (4) aufweist, entlang dem die Flüssigkeit während des Normalbetriebsmodus (I) leitbar ist, und einen zweiten Flüssigkeitsführungsweg (5) aufweist, entlang dem die Flüssigkeit während des Datenübertragungsmodus (II) leitbar ist.

9. Verwendung einer Pumpe (3) einer Heißgetränkezubereitungsvorrichtung nach einem der Ansprüche 1 bis 8, insbesondere einer Kapselmaschine, als Aktuator, in einem Schallemissionen und/oder Vibrationen und/oder elektromagnetische Emissionen erzeugenden Datenübertragungsmodus (II) zur Übertragung von Daten zu einem Empfangsgerät (17).

## Claims

1. Hot beverage preparation apparatus, in particular a capsule machine (1), having a controller, an actuator which generates sound emissions and/or vibrations and/or electromagnetic emissions and which can be operated in a normal operating mode (I) for the purpose of preparing hot beverages, and a receiving device, the hot beverage preparation apparatus being designed to transmit data to the receiving device (17), **characterised in that** the actuator is configured as a pump (3) for conveying fluid, in particular water, and operated by the controller at least in one data transmission mode (II) such that sound emissions and/or vibrations and/or electromagnetic emissions for the purpose of transmitting data to a receiving device (17) are generated.

2. Hot beverage preparation apparatus according to claim 1, **characterised in that** the data is measurement values from sensors of the hot beverage preparation apparatus and/or fault codes identifying malfunctions of the hot beverage preparation apparatus and/or operating parameters of the hot beverage preparation apparatus and/or information relating to a hot beverage.

3. Hot beverage preparation apparatus according to claim 1 or 2, **characterised in that** the data features at least one start signal (S) identifying the start of the data transmission and a separating signal (T) separating data components of the data.

4. Hot beverage preparation apparatus according to one of claims 1 to 3, **characterised in that** the actuator can be operated first in at least one data transmission mode (II) and then in normal operating mode (I), in particular in the case of fault detection by the hot beverage preparation apparatus.

5. Hot beverage preparation apparatus according to one of claims 1 to 4,
**characterised in that** the actuator can be operated for a predefined first minimum time period during normal operating mode (I) and for a predefined second minimum time period during the at least one data transmission mode (II), with the first minimum time period being longer than the second minimum time period.

6. Hot beverage preparation apparatus according to one of claims 1 to 5, **characterised in that** the pump (3) conveys a greater quantity of fluid in normal operating mode (I) than in data transmission mode (II).

7. Hot beverage preparation apparatus according to one of claims 1 to 6, **characterised in that** the pump (3) has a spring (8) and a piston (9) supported so that it can move between two end positions, with the spring (8) being tensioned in one of the end positions.

8. Hot beverage preparation apparatus according to one of claims 1 to 7, **characterised in that** the hot beverage preparation apparatus has a first fluid conduction path (4), along which fluid can be conducted in normal operating mode (I), and a second fluid conduction path (5), along which fluid can be conducted in data transmission mode (II).

9. Use of a pump (3) of a hot beverage preparation apparatus according to one of claims 1 to 8, in particular a capsule machine, as an actuator, in a data transmission mode (II) which generates sound emissions and/or vibrations and/or electromagnetic emissions for the purpose of transmitting data to a receiving device (17).

## Revendications

1. Dispositif de préparation de boissons chaudes, notamment machine à capsules (1), comprenant une commande, comprenant un actionneur générant des émissions sonores et/ou des vibrations et/ou des émissions électromagnétiques, lequel actionneur peut fonctionner dans un mode de fonctionnement normal (I) pour la préparation de boissons chaudes, et comprenant un appareil récepteur, le dispositif de préparation de boissons chaudes étant réalisé pour la transmission de données à l'appareil récepteur (17), **caractérisé en ce que** l'actionneur est réalisé comme pompe (3) pour le transport de liquide, notamment d'eau, et qu'il peut être mis en fonction par la commande dans au moins un mode de transmission de données (II) de manière à ce que des émissions sonores et/ou des vibrations et/ou des émissions électromagnétiques soient générées pour la transmission de données à un appareil récepteur (17).

2. Dispositif de préparation de boissons chaudes selon la revendication 1, **caractérisé en ce que** les données sont des valeurs de mesure de capteurs du dispositif de préparation de boissons chaudes et/ou de dysfonctionnement du code d'erreur caractérisant le dispositif de préparation de boissons chaudes et/ou de paramètres de fonctionnement du dispositif de préparation de boissons chaudes et/ou d'informations concernant une boisson chaude.

3. Dispositif de préparation de boissons chaudes selon la revendication 1 ou 2, **caractérisé en ce que** les données présentent au moins un signal de départ (S) caractérisant le début de la transmission des données et un signal de séparation (T) séparant les constituants des données.

4. Dispositif de préparation de boissons chaudes selon l'une quelconque des revendications 1 à 3, **caractérisé en ce que** l'actionneur peut fonctionner d'abord dans au moins un mode de transmission de données (II) et ensuite de manière subséquente dans le mode de fonctionnement normal (I), notamment en cas d'une saisie d'erreur par le dispositif de préparation de boissons chaudes.

5. Dispositif de préparation de boissons chaudes selon l'une quelconque des revendications 1 à 4, **caractérisé en ce que** pendant le mode de fonctionnement normal (I), l'actionneur peut fonctionner pour une première durée minimale prédéterminée et **en ce que** pendant l'au moins un mode de transmission de données (I), il peut fonctionner pour une deuxième durée minimal prédéterminée, la première durée minimale étant plus longue que la deuxième durée minimale.

6. Dispositif de préparation de boissons chaudes selon l'une quelconque des revendications 1 à 5, **caractérisé en ce qu'**en mode de fonctionnement normal (I), la pompe (3) transporte une quantité de liquide plus grande qu'en mode de transmission de données (II).

7. Dispositif de préparation de boissons chaudes selon l'une quelconque des revendications 1 à 6, **caractérisé en ce que** la pompe (3) présente un ressort (8) et un piston (9) logé de manière déplaçable entre deux positions finales, le ressort (8) étant tendu dans l'une des positions finales.

8. Dispositif de préparation de boissons chaudes selon l'une quelconque des revendications 1 à 7, **caractérisé en ce que** le dispositif de préparation de boissons chaudes présente une première voie de guidage de liquide (4), le long de laquelle le liquide peut être guidé pendant le mode de fonctionnement normal (I), et une deuxième voie de guidage de liquide (5), le long de laquelle le liquide peut être guidé pendant le mode de transmission de données (II).

9. Utilisation d'une pompe (3) d'un dispositif de préparation de boissons chaudes selon l'une quelconque des revendications 1 à 8, notamment d'une machine à capsules, comme actionneur dans un mode de transmission de données (II) générant des émissions sonores et/ou des vibrations et/ou des émissions électromagnétiques pour la transmission de données à un appareil récepteur (17).
